Europäisches Patentamt

European Patent Office

Office européen des brevets

(11) Publication number: **0 267 713**
**A2**

## (12) EUROPEAN PATENT APPLICATION

(21) Application number: **87309565.7**

(22) Date of filing: **29.10.87**

(51) Int. Cl.⁴: **F16G 11/00**

(30) Priority: **13.11.86 GB 8627190**

(43) Date of publication of application:
**18.05.88 Bulletin  88/20**

(84) Designated Contracting States:
**AT BE DE FR GB NL SE**

(71) Applicant: **IMPERIAL CHEMICAL INDUSTRIES PLC**
**Imperial Chemical House Millbank**
**London SW1P 3JF(GB)**

(72) Inventor: **Kingston, Derek**
**Bramfitt House 22 Boroughbridge Road**
**Knaresborough North Yorkshire(GB)**

(74) Representative: **Corbett, William Michael et al**
**Imperial Chemical Industries PLC Legal**
**Department: Patents Po Box 6 Bessemer**
**Road**
**Welwyn Garden City Herts, AL7 1HD(GB)**

(54) Means for terminating an end of a rope.

(57) The invention discloses an improved means for terminating an end of a fibre rope which reduces the abrasion of the fibres during repeated tensioning of the rope. The means comprises a socket in which at least part of the inner wall is tapered, and a member having the shape of a cone which fits within the socket so as to provide a space between the tapered inner wall of the socket and the body of the cone of substantially constant annular area. The improvement comprises the member being of such length that when the means is in use to terminate an end of the rope, no portion of the socket projects beyond the member in a manner whereby it makes contact with the fibres of the rope to cause abrasion of the fibres.

The present invention relates to a means for terminating an end of a fibre rope, particularly a rope comprising a core of parallel filaments encased in a sheath of thermoplastic material.

UK Patent No. 1 341 013 discloses a means for terminating an end of a fibre rope comprising a socket at least part of the inner wall of which is tapered, and a member having the shape of a cone with the apex of larger included angle than the body of the cone which fits within the socket so as to provide a space between the tapered inner socket wall and the body of the cone of substantially constant annular area.

When a rope terminated by such a terminal is subjected to extreme conditions of testing, there may be under certain circumstances a tendency for the fibres in the rope to abrade. For ropes of low breaking strain (eg of the order of 60 tonnes) it has been found that any abrasion which may occur is predominantly in the region where the fibres contact the conical member at the point where the member changes shape to form the apex. In other ropes, eg ropes of breaking strain of 425 tonnes, abrasion may occur where the fibres contact the inner wall of the socket in the region opposite to that part of the conical member where it changes shape to form the apex. It has now been found that any tendency for the filaments to abrade can be reduced or even eliminated by modifying the shape of the socket and/or conical member.

According to one aspect of the present invention there is provided a means for terminating an end of a fibre rope comprising a socket, at least part of the inner wall of which is tapered, and a member having the shape of a cone which fits within the socket so as to provide a space between the tapered inner socket wall and the body of the cone of substantially constant annular area, characterised in that the member is of such length that when the means is in use to terminate an end of a rope, no portion of the socket projects beyond the member in a manner whereby it makes contact with the fibres of the rope to cause abrasion thereof.

According to another aspect of the present invention there is provided a fibre rope terminated with a device comprising a socket, at least part of the inner wall of which is tapered, and a member having the shape of a cone which fits within the socket so as to provide a space between the tapered inner socket wall and the body of the cone of substantially constant annular area, through which the rope passes, characterised in that the member is of such length that no portion of socket projects beyond the member in a manner whereby it makes contact with the fibres of the rope to cause abrasion thereof.

Throughout this specification the term "cone" includes truncated cone, and cones in which the walls may be slightly concave or convex in shape.

The means of the present invention is particularly but not exclusively suitable for terminating ropes comprising a core of parallel filaments encased in a sheath of thermoplastic material.

It is preferred that when the parts are assembled together and ultimately made tight the area of the annular space between the tapered inner socket wall and the surface of the cone is substantially equal to the total cross-sectional area of the fibres in the rope end.

It is further preferred in the present invention that the included cone angle of the body of the cone is less than the natural angle of friction between the material of the cone and the fibres of the rope which is to be terminated.

The term fibre rope as used herein means a rope made of natural or synthetic fibres or mixtures thereof, in staple fibre or continuous filament forms and includes both ropes of the conventional twisted, braided or plaited structure and ropes comprising a core of substantially parallel continuous filaments, for example poly-(ethylene terephthalate) filaments encased in a sheath of thermoplastic polymeric material.

In terminating a rope of twisted, braided or plaited structure the rope end is untwisted and the fibres loosened so as to be easily distributed about the inner tapered surface of a socket. In terminating the sheathed type of rope a section of the sheath at the rope end is first removed.

The term natural angle of friction as used herein has the accepted meaning as expressed by the relationship :

$$u = \tan \phi$$

where u is the coefficient of friction between the material of the rope fibres and the material of the inner cone member and $\phi$ is the natural angle of friction.

In preparing or selecting a terminator for a particular fibre rope $\phi$ is first determined and then the included cone angle of the body of the inner cone member is selected to be less than this value, preferably at least about 10% less. The body of the inner cone member is preferably of right circular form and the tapered portion of the socket of the same form but of a smaller included angle in order that the area of the annulus between the two conical parts is substantially constant over their whole length and equal to the total cross-sectional area of the fibres in a rope end when the parts are assembled together with the fibres of a rope end and made right. Juxtaposition of two right circular conical parts in this fashion does not give exactly constant annular area over the whole length, there being a small departure from precise constancy amounting to only a few percent of fibre area towards the cone apices which is without practical effect on the efficiency of termination.

The length of the conical parts may be no greater than that necessary to provide an adequate wedging action to utilise substantially the full strength of a rope. For polyester filaments the length may be calculated from the total cross-sectional area of the fibres in a rope end by means of the following empirical relationship:

L = 6.0 D

where L is the length of the conical parts and D is the equivalent diameter of a circle having an area equal to the total fibre cross-sectional area, the values of L and D being expressed in the same units.

Use of a length as calculated by this relationship also ensures that minimum shear stresses are induced in the filaments or fibres of a rope and hence that the possibility of fibre or filament breakage or damage is also minimised.

For adequate strength a socket is preferably made of steel or other metal such as brass, aluminium or alloys thereof, or stainless steel if corrosion resistance is desired. The inner cone member may also be made from various metals or from a polymeric material, for example nylon 66 or polyethylene terephthalate by injection moulding. .

In a typical example of a steel terminator as shown in the drawings for a rope comprising a core of 19,200 polyethylene terephthalate filaments having a total denier of $10^6$ encased in a polyethylene sheath, the steel socket measures only six inches in overall length and 1.5 inches diameter. The main body of the inner member made of nylon 66 is of the order of 2 inches long and of included angle 5°. As a rope of the above size and kind will have a breaking load of about 5 tonnes it is seen that a fitting according to this invention is small and neat. It is in addition highly efficient in preventing fibre slippage when placed under high tension and allows substantially the full rope strength to be available in the terminated structure as soon as the inner cone member is driven home.

The invention will be further described with reference to the accompanying schematic drawings which show various embodiments of the invention. These drawings are of a longitudinal cross-section of the embodiments showing a rope comprising a core of parallel filaments encased in a thermoplastic sheath mounted therein.

Figure 1 illustrates a means of terminating a rope according to the present invention in which the conical member is a truncated cone.

Figure 2 shows a modified form of the means illustrated in Fig 1.

Figure 3 shows a rope terminator in which the conical member is a cone.

Figure 4 shows a modified form of the means illustrated in Fig 3.

Figure 5 shows a modification of the means illustrated in Fig 2.

Figure 6 shows a modification of the means illustrated in Fig 1.

Figure 7 shows a further modification of the means illustrated in Fig 1.

Figure 8 shows another modification of the means illustrated in Fig 1.

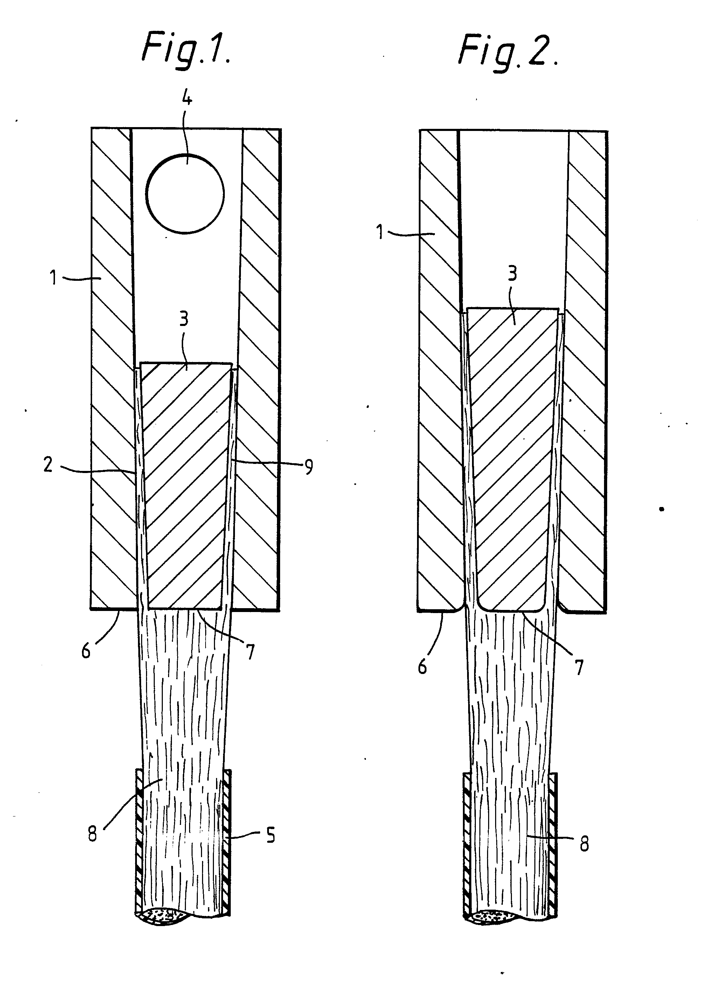

The means shown in Fig 1 for terminating an end of a fibre rope according to the invention comprises a socket 1 externally of cylindrical form which has an intermediate portion 2 of an inner wall of tapered form, the included angle of the conical part so formed being smaller than the included cone angle of the truncated conical member 3. The conical member 3 fits inside the socket with a small annular space 9 therebetween as described above. A pair of diametrically opposed apertures 4 are formed in socket 1 for attachment of a pin or shackle or other mounting means. The length of the member 3 is such that when the means is in use to terminate a rope 5, the end 6 of the socket 1 and the end 7 of the member 3 lie in a plane, as shown in the figure. Thus no portion of the socket 1 projects beyond the member 3 to thereby make contact with and cause abrasion of the filaments 8 of the rope.

Alternative to the upper part of the socket 1 having apertures 4, as shown in Fig. 1, this part may be formed as two apertured lugs which may then allow attachment of the socket to a single lug in place of dual shackles which may otherwise be necessary.

In carrying out the termination process with a rope of the kind illustrated in the drawing, a section of sheath 5 greater than the length of the conical member 3 is removed from the top end after this has been inserted in the lower end of socket 1. The filaments 8 of the free end are distributed as evenly as possible around the conical member, and the member is driven down until tightly wedged at which point the ends 6 and 7 lie essentially in a plane.

Alternative to driving the conical member 3 into the socket 1, it may be drawn into and wedged in the tapered portion 2 of the socket 1 by pulling firmly on the rope. In this way utilisation of the full strength of the rope is ensured by preventing distortion or crumpling of the fibre ends which could lead to uneven tensioning and premature breaking of the filaments when a load is applied.

Additionally, a small plug (not shown) may be inserted into the upper part of socket 1 to close off the ends of the filaments surrounding the upper part of the conical member 3 after the termination process has been completed.

Fig. 2 shows a minor modification of the termination means illustrated in Fig 1. In this modification, the ends 6 and 7 of the socket 1 and member 3, respectively, are rounded where they make contact with the filaments 8 of the rope.

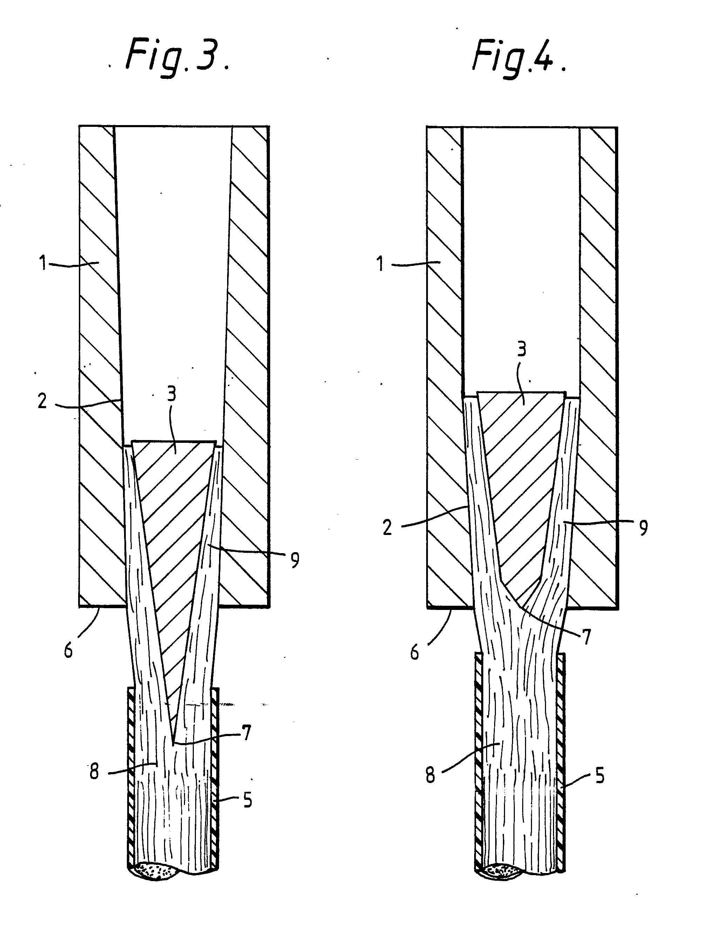

In the rope termination means illustrated in Fig 3 the member 3 is a full cone, rather than a truncated cone. The apex 7 of the member 3 projects beyond the plane of the end of the socket 1 when the means is used to terminate the end of the rope. In carrying out the termination process with this type of terminator, the rope may be drawn into the socket 1 until the end of the sheath is about level with the lower end 6 of the socket. The filaments 8 of the free end of the rope are distributed as evenly as possible around the tapered portion 2 of the socket. The apex 7 of the member 3 is then inserted into the centre of the mass of filaments and driven down until tightly wedged. The length of the member 3 is such that when the rope is wedged, the apex 7 projects beyond the plane of the end 6 of the socket 1.

The member 3 of the embodiment shown in Fig 4 comprises a cone, the apex 7 of which is of larger included angle than that of the body thereof. The apex 7 facilitates locating the member 3 in the mass of filaments 8. Since the filaments 8 of the rope make very little or no contact with the apex 7 of the member 3, it can project beyond the plane of the ends 6 of the member 1 to a limited extent without giving rise to abrasion of the filament.

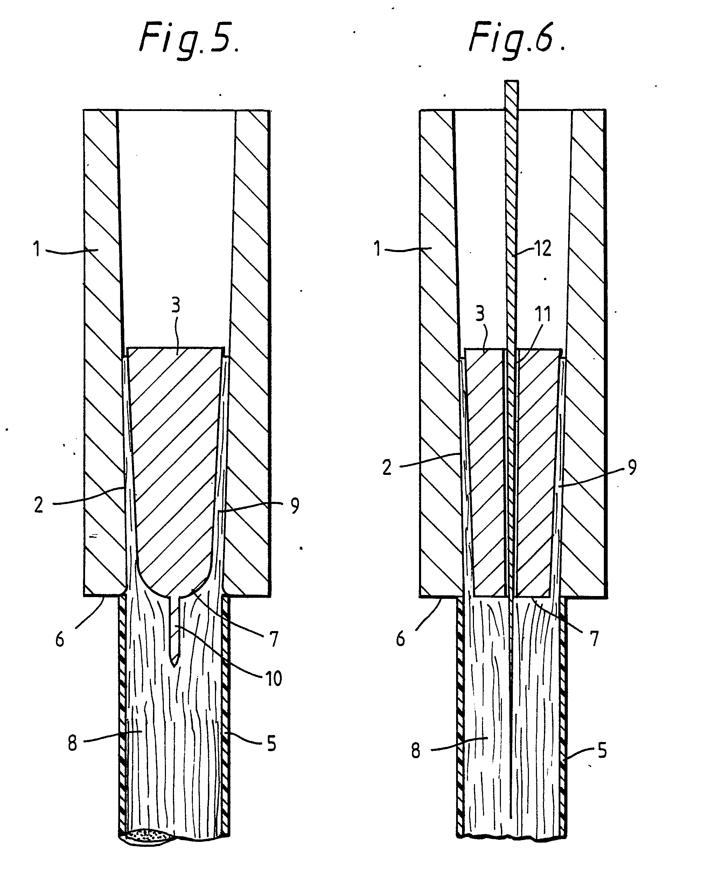

The termination means illustrated in Fig. 5 is a modification of that shown in Fig 1. The end 7 of the truncated conical member 3 has a spike 10 which facilitates locating the member 3 in the mass of filaments 8.

In the termination means illustrated in Fig 6, the truncated conical member 3 has a hole 11 bored along its centre line through which a spike 12 is inserted. The spike helps facilitate locating the member 3 in the mass of filaments 8.

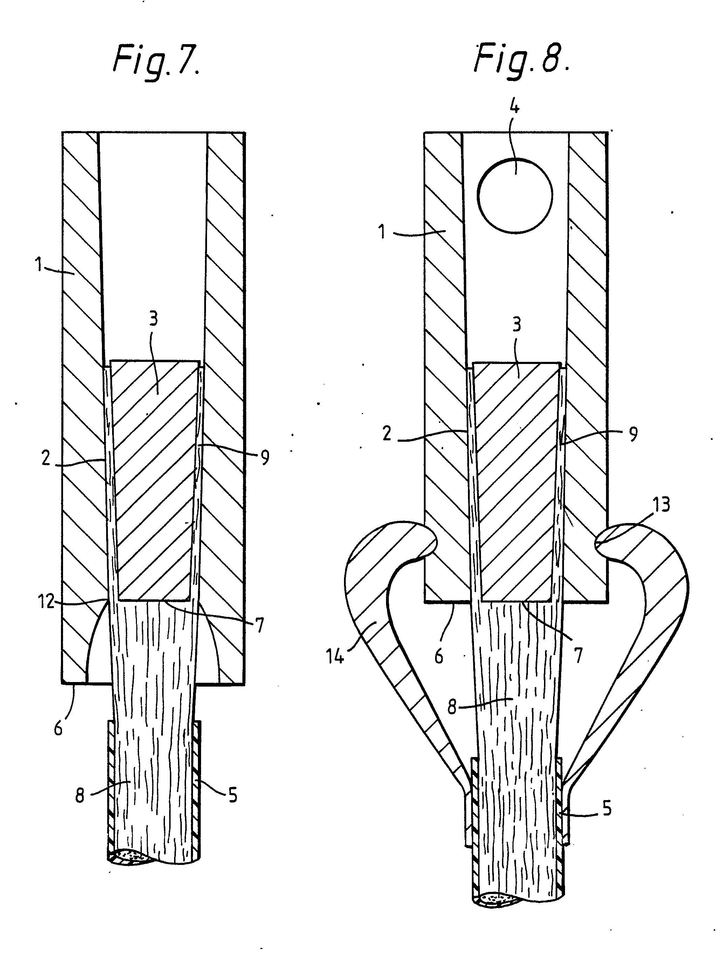

The socket 1 of the termination means illustrated in Fig 7 has ends 6 which project beyond the end 7 of member 3. However, the inner wall 2 of the socket is of concave shape from diameter 13 to the end 6, diameter 13 being planar with the end 7. Thus, although the socket projects beyond end 7, no part of the projection makes contact with the filaments 8 of the rope to thereby cause abrasion of the filaments. The projection provides a means of protecting the exposed filaments 8 against contact with other objects.

Figure 8 illustrates a modified terminator shown in Fig 1. In this form, the socket 1 has an annular recess 15 in the lower portion in which is mounted a rubber moulding 14 which extends to and beyond the sheath 5 of the rope. The moulding is thicker and more resilient in the region near the socket 1, and becomes thinner and more flexible nearer the rope. The rubber moulding protects the exposed filaments of the rope from exposure to light, moisture and other agents capable of causing degradation of the filaments. Because of the variations in its thickness, and therefore flexibility, it also provides a means of reducing the tendency of the exposed filaments of the rope from kinking.

The terminator shown in Fig 8 may be modified by replacing the flexible moulding 14 by a rigid sheath, for example one formed from steel. Such a sheath not only protects any exposed filaments from light, etc. but also prevents kinking or bending of the rope in the vicinity of the terminator.

The invention will be further described with reference to the following example in which the rope used had a nominal breaking load of 6 tonnes and comprised continuous filaments of an aramid sold under the trade name KEVLAR each of 1.67 decitex encased in a sheath of polyethylene. The rope was fitted with a terminal of the type illustrated in Figure 2 and was then tensioned in a cyclical manner from 5 to 65% of the nominal breaking load of the fibre. After 118,000 cycles the rope failed due to stress rupture of the filaments. When the rope was terminated by a terminal of the type described in British Patent No. 1 341 013 and was subjected to the above tensioning programme, it failed after only 22,250 cycles due to abrasion of the filaments in the region of the apex of the conical member.

## Claims

1. A means for terminating an end of a fibre rope comprising a socket, at least part of the inner wall of which is tapered, and a member having the shape of a cone which fits within the socket so as to provide a space between the tapered inner socket wall and the body of the cone of substantially constant annular area, characterised in that the member (3) is of such length that when the means is in use to terminate an end of a rope (5), no portion of the socket (1) projects beyond the member (3) in a manner whereby it makes contact with the fibres of the rope to cause abrasion thereof.

2. A means according to claim 1, characterised in that the member (3) is a truncated cone.

3. A means according to claim 2, characterised in that the member (3) has a spike (10) which, when the means is in use, extends into the fibres (8) of the rope.

4. A means according to claim 1, characterised in that the member (3) has a hole (11) bored along its centre line through which a spike (12) is inserted.

5. A means according to claim 1, characterised in that the end (6) of the socket (1) projects beyond the member (3), the inner wall (2) of the socket (1) being of concave or other shape from the diameter (13) planar with the end (7) of the membrane (3) to its end (6) to avoid abrasive contact with the fibres of the rope.

6. A means according to Claim 1, characterised in that it includes a moulding (14) one end of which cooperates with the outer wall of the lower section of the socket (1) and the other is capable of cooperating with the surface (5) of the rope to be terminated.

7. A means according to claim 6 characterised in that the resilience of the moulding (14) is greatest in that part which cooperates with the socket (1) and decreases towards that part which cooperates with the surface of a rope (5).

8. A means according to Claim 1 characterised in that it includes a rigid sheath, one end of which cooperates with the outer wall of the lower section of the socket (1) and the other end is capable of cooperating with the surface (5) of the rope to be terminated.

9. A fibre rope terminated with a device comprising a socket, at least part of the inner wall of which is tapered, and a member having the shape of a cone which fits within the socket so as to provide a space between the tapered inner socket wall and the body of the cone of substantially constant annular area through which the rope passes characterised in that the length of the member (3) is of such length that no portion of the socket (1) projects beyond the member (3) in a manner whereby it makes contact with the fibres of the rope to cause abrasion thereof.

# Fig.1.

# Fig.2.

## Fig.3.

## Fig.4.

# Fig.5.

# Fig.6.

0 267 713

# Fig.7.

# Fig.8.